(19) Europäisches Patentamt
European Patent Office
Office européen des brevets

(11) EP 1 377 622 B1

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(21) Anmeldenummer: **02729834.8**

(22) Anmeldetag: **28.03.2002**

(51) Int Cl.[7]: **C08G 63/00**

(86) Internationale Anmeldenummer:
**PCT/DE2002/001152**

(87) Internationale Veröffentlichungsnummer:
**WO 2002/079296 (10.10.2002 Gazette 2002/41)**

(54) **ZWEI-KOMPONENTEN-WASSERLACKSYSTEM UND VERFAHREN ZU DESSEN HERSTELLUNG**

TWO-COMPONENT AQUEOUS PAINT SYSTEM AND METHOD FOR PREPARING THE SAME

SYSTEME DE PEINTURE AQUEUSE A DEUX COMPOSANTS ET PROCEDE POUR SON PREPARATION

(84) Benannte Vertragsstaaten:
**AT BE CH CY DE DK ES FI FR GB GR IE IT LI LU MC NL PT SE TR**

(30) Priorität: **30.03.2001 DE 10115933**

(43) Veröffentlichungstag der Anmeldung:
**07.01.2004 Patentblatt 2004/02**

(73) Patentinhaber: **Ashland-Südchemie-Kernfest GmbH**
**42489 Wülfrath (DE)**

(72) Erfinder:
- **WINTER, Reinhard**
  **42489 Wülfrath (DE)**
- **KUHLMANN, Peter**
  **42489 Wülfrath (DE)**
- **SCHWARTE, Jörg**
  **45276 Essen (DE)**

(74) Vertreter: **Vossius & Partner**
**Siebertstrasse 4**
**81675 München (DE)**

(56) Entgegenhaltungen:
**WO-A-02/31021**
**WO-A-93/09157**
**DE-A- 19 822 468**
**GB-A- 1 038 696**
**US-A- 3 223 659**
**US-A- 3 442 835**
**US-A- 3 639 315**

- **DATABASE WPI Week 8910 Derwent Publications Ltd., London, GB; AN 1989-074730 XP002216283 & JP 01 029425 A (HITACHI CHEMICAL CO) & PATENT ABSTRACTS OF JAPAN & JP 01 029425 A (HITACHI CHEMICAL CO)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Zwei-Komponenten-Wasserlacksystem, ein Verfahren zur Herstellung desselben und die Verwendung eines hydroxyfunctionellen Polyesterharzes zur Herstellung eines zwei-komponenten-Wasserlacksystems.

Aufgrund ökologischer Probleme und dem damit verbundenen Zwang zur Reduzierung von Losemittetemissionen haben Wasserlacke sich in verschiedenen Bereichen stark verbreitet und in vielen Fällen lösemittelhaltige Anstriche ersetzt.

In Bereichen mit hohen Anforderungen an Wetterbeständigkeit, Korroslonsschutz und Chemikalienbeständigkeit haben sich wäßrige Zwei-Komponenten-Polyurethansysteme seit Jahren bestens bewährt. Diese Zwei-Komponenten-Systeme bestehen aus einer Polyol- und einer Isocyanatkomponente, die erst kurz vor der Verarbeitung gemischt werden.

Ein-Komponenten- und Zwei-Komponentenlacke unterscheiden sich insbesondere im Qualitätsniveau wesentlich voneinander. Zwei-Komponenten-Polyurethanlackierungen sind sowohl in den mechanischen Eigenschaften, wie Elastizität und Härte, aber auch in der Beständigkeit gegen Wetter, Lösungsmittel und Umwelteinflüsse den lufttrocknenden Ein-Komponenten-Lackierungen deutlich überlegen.

Als Isocyanatkomponenten werden hauptsächlich oligomere Isocyanate, z.B. auf Basis von Hexamethylendiisocyanat oder Isophorondiisbcyanat eingesetzt. Als Polyolkomponenten eignen sich grundsätzlich hydroxyfunktionelle Acrylatdispersionen, hydroxyfunktionelle Polyester und Alkydharze sowie hydroxyfunktionelle Polyurethandispersionen.

Diese Lacksysteme finden z.B. in der Fahrzeugtackierung sowie in der Kunststoff-, Möbel- und Industrielakkierung mehr und mehr Verbreitung.

Einer weiten Verbreitung stand jedoch bisher in vielen Fällen das Problem mangelnder Prozeßsicherheit entgegen. Bei ungünstigen Härtungsbedingungen, z.B. ungünstigen klimatischen Bedingungen (hohe Luftfeuchtigkeit), tritt bei der Trocknung Blasenbildung durch $CO_2$-Entwicklung aus der Nebenreaktion des Isocyanates mit Wasser auf. Insbesondere bei hohen Schichtdicken kommt es hierdurch zu unerwünschter Blasenbildung verbunden mit Unregelmäßigkeiten in der Oberfläche. Je nach Trocknungsbedingungen, abhangig von Temperatur und Luftfeuchtigkeit, lassen sich deshalb mit derartigen Systemen Schichtdicken von max. 60 - 80 $\mu$m prozeßsicher herstellen.

In DE-A-198 22 468 wird ein Alkydharzsystem beschrieben, welches sich durch geringe Blasenneigung und damit Verbesserte Prozeßsicherheit auszeichnet. Aufgrund einer durch die darin enthaltenen Ölkomponenten verursachten, wenn auch geringen Vergilbungsneigung, eignet sich dieses System jedoch nicht für Anwendungen mit höchsten Anforderungen an die Prödukteigerischaften, beispielsweise Wetterbeständigkeit, Korrosionsschutz und Chemikalienbeständigkeit oder mechanische Eigenschaften, wie sie z.B. im Bereich der Automobil-Deck- und Reparaturlacke angetroffen werden.

Ein weiterer Nachteil bekannter auf Alkydharzen aus natürlichen Ölen basierender Lacksysteme ist eine wenn auch nur sehr geringe Abnahme des Glanzgrades und/oder Veränderung der mechanischen Eigenschaften der Lackschicht unter üblichen Alterungsbedingungen (insbesondere bei Einwirkung von UV-Strahlungsanteilen und/oder erhöhter Temperatur), die sich unter Umständen bei Anwendungen mit höchsten Anforderungen nachteilig auswirken kann.

Aufgabe der vorliegenden Erfindung ist es, ein Harzsystem für ein Zwei-Komponenten-Wasserlacksystem zur Verfügung zu stellen, welches sich durch eine höchstens geringe Neigung zur Blasenbildung auszeichnet und auch höchsten Ansprüchen bezüglich der Vergilbungsneigung und Wetterbeständigkeit genügt. Der Glanzgrad und/oder die mechanischen Eigenschaften sollte(n) auch langfristig keine wesentlichen Einbußen erfahren.

Das Harzsystem sollte sich bevorzugt ohne Verwendung von organischen Lösungsmitteln öder mit höchstens geringem Anteil an Lösungsmitteln stabil in Wasser dispergieren lassen, um Lacksysteme mit günstigen VOC-Werten zu erhalten.

Diese Aufgabe wird durch den Gegenstand der vorliegenden Erfindung gelöst. Die Erfindung betrifft ein Zwei-Komponenten-Wasserlacksystem, das (A) eine wäßrige Emulsion eines hydroxyfunktionellen Polyesterharzes, das durch Umsetzung einer Zusammensetzung, enthaltend

(i) mindestens einen niedermolekularen, mehrwertigen Alkohol mit mindestens zwei Hydroxylgruppen pro Molekül,

(ii) mindestens ein Polyetherpolyol,

(iii) mindestens eine monofunktionelle gesättigte aliphatische, cycloaliphatische oder aromatische Carbonsäure, und

(iv) mindestens eine Polycarbonsäure mit mindestens zwei Carboxylgruppen pro Molekül,

wobei die Zusammensetzung keine ethylenisch ungesätigten Monocarbonsäuren aufweist, erhältlich ist,und (B) eine Isocyanatkomponente umfaßt.

Das hydroxyfunktionelle Polyesterharz kann weiterhin in einer Harzemulsion, umfassend eine wäßrige Emulsion des Polyesterharzes, sowie in einem Stammlack, umfassend die Harzemulsion und einen oder mehrere Zuschlagstoffe, ausgewählt aus Pigmenten, Füllstoffen, Hilfsstoffen und Cosolventien, verwendet werden.

Die Erfindung betrifft weiterhin ein Verfahren zur Herstellung eines Zwei-Komponenten-Wasserlacksystems, das die Schritte

Bereitstellen einer Polyesterharzkomponente (A) durch

(a) Umsetzung einer Zusammensetzung, enthaltend mindestens einen niedermolekularen, mehrwertigen Alkohol mit mindestens zwei Hydroxylgruppen pro Molekül, mindestens ein Polyetherpolyol, mindestens eine monofunktionelle gesättigte aliphatische, cycloaliphatische oder aromatische Carbonsäure und mindestens eine Polycarbonsäure mit mindestens zwei Carboxylgruppen pro Molekül zu einem hydroxyfunktionellen Polyesterharz, wobei die Zusammensetzung keine ethylenisch ungesättigten Monocarbonsäuren aufweist,

(b) Neutralisation des hydroxyfunktionellen Polyesterharzes mit Ammoniak oder Amin,

(c) Emulgieren des hydroxyfunktionellen Polyesterharzes in Wasser, und

(d) gegebenenfalls Zusatz von einem oder mehreren Zuschlagstoffen, ausgewählt aus Pigmenten, Füllstoffen, Hilfsstoffen und Cosolventien, sowie

Bereitstellen einer Isocyanatkomponente (B),

umfaßt.

Die Erfindung betrifft weiterhin die Verwendung eines hydroxyfunktionellen Polyesterharzes, erhältlich durch Umsetzung einer Zusammensetzung, die

(i) mindestens einen niedermolekularen mehrwertigen Alkohol mit mindestens zwei Hydroxylgruppen pro Molekül,
(ii) mindestens ein Polyetherpolyol,
(iii) mindestens eine monofunktionelle gesättigte aliphatische, cycloaliphatische oder aromatische Carbonsäure, und
(iv) mindestens eine Polycarbonsäure mit mindestens zwei Carboxylgruppen pro Molekül,

enthält, wobei die Zusammensetzung keine ethylenisch ungesättigten Monocarbonsäuren aufweist, zur Herstellung eines Zwei-Komponenten-Wasserlacksystems, wobei das Zwei-Komponenten-Wasserlacksystem eine wässrige Emulsion des hydroxyfunktionellen Polyesterharzes und eine Isocyanatkomponente enthält.

Die erfindungsgemäßen Wasserlacke eignen sich für verschiedene Untergründe, wie Metall, Kunststoff oder Holz, und sind somit sowohl als Grundierungen und Füller als auch als Decklacksysteme geeignet.

Das erfindungsgemäße System zeichnet sich durch eine sehr geringe Blasenempfindlichkeit aus, wodurch sich Schichtdicken von 120 - 150 µm und darüber ohne unerwünschte Blasenbildung erzielen lassen.

Außerdem zeichnet sich das erfindungsgemäße System durch eine hohe UV-Beständigkeit aus. Dadurch lassen sich Lacksysteme herstellen, die auch Anwendungen mit den höchsten Anforderungen gerecht werden. Insbesondere Probleme, die durch Veränderung der Lackschicht durch Einwirkung von UV-Strahlung verursacht werden können, z.B. Veränderungen in den mechanischen Eigenschaften und Brüchigkeit, aber auch optische Veränderungen, wie Vergilbung können auf ein minimales Ausmaß reduziert oder gar verhindert werden.

Die Zwei-Komponenten-Wasserlacksysteme der vorliegenden Erfindung besitzen eine hohe Lagerstabilität. Außerdem kann auf den Einsatz von umweltschädlichen oder toxischen Lösungsmitteln verzichtet werden.

Im Vergleich zu herkömmlichen Wasserlacksystemen auf der Basis von Alkydharzen aus natürlichen Fetten und Ölen bieten die Wasserlacksysteme der vorliegenden Erfindung den weiteren Vorteil einer genaueren Einstellbarkeit der Eigenschaften des Endproduktes.

Da natürliche Fette und Öle Gemische mit nicht vollständig bekannter Zusammensetzung sind, die natürlichen Schwankungen unterworfen sein können; können sich geringe Probleme hinsichtlich der Reproduzierbarkeit der genauen Zusammensetzung ergeben. Diese Probleme können mit den Systemen der vorliegenden Erfindung umgangen werden. Weiterhin ergibt sich eine größere Variationsmöglichkeit in den gewünschten Eigenschaften des Endprodukts, die sich hierdurch gezielt und reproduzierbar einstellen lassen.

Die erfindungsgemäßen Lacksysteme ergeben Lackschichten mit hohem und stabilen Glanz.

**Polyesterharzkomponente (A)**

Die Polyesterharzkomponente (A) umfaßt eine wäßrige Emulsion eines hydroxyfunktionellen Polyesterharzes, welches durch Umsetzung (Polykondensation, Veresterung) einer Alkoholkomponente und einer Säurekomponente erhältlich ist.

Die Alkoholkomponente enthält (i) mindestens einen mehrwertigen niedermolekularen Alkohol mit mindestens zwei Hydroxylgruppen und (ii) mindestens ein Polyetherpolyol.

Die Säurekomponente enthält (iii) mindestens eine monofunktionelle, gesättigt aliphatische oder cycloaliphatische oder aromatische Carbonsäure und (iv) mindestens eine Polycarbonsäure mit mindestens zwei Carboxylgruppen pro Molekül.

Die Polyesterharzkomponente ist dadurch gekennzeichnet, daß sie keine ethylenisch ungesättigten monofunktionellen Carbonsäureeinheiten enthält. In einer bevorzugten Ausführungsform weist keine der zur Herstellung des Polyesterharzes verwendeten Komponenten (i) bis (iv) ethylenisch ungesättigten Charakter auf.

**Mehrwertiger Alkohol (i)**

Geeignete mehrwertige Alkohole (i) sind gesättigte aliphatische Alkohole, die mindestens zwei, bevorzugt mehr als zwei Hydroxylgruppen pro Molekül aufweisen. Unter niedermolekutarert Alkoholen werden in der vorliegenden Erfindungen solche Verbindungen verstanden, die entweder monomolekular sind oder einen sehr geringen Oligomerisierungsgrad aufweisen, z.B. di-, tri- oder tetramolekulare Verbindungen. Solche niedermolekularen Verbindungen besitzen üblicherweise ein Molekulargewicht von weniger als 400, bevorzugt von weniger als 200.

Besonders bevorzugt werden solche Alkohole verwendet, die mindestens zwei, insbesondere mehr als zwei, jedoch nicht mehr als sechs Hydroxylgruppen pro Molekül aufweisen. Übliche Alkohole (i) weisen 2 bis 20, bevorzugt 2 bis 8 Kohlenstoffatome auf.

Beispiele geeigneter mehrwertiger Alkohole (i) sind

- zweiwertige Alkohole der allgemeinen Formel

$$OH\text{-}(R)\text{-}OH$$

wobei R ein divalenter gesättigter aliphatischer oder cycloaliphatischer Kohlenwasserstoffrest ist, der ein oder mehrere (vorzugsweise nicht mehr als 4) nichtperoxidische Sauerstoffatome enthalten kann und bevorzugt 2 bis 20, besonders bevorzugt 2 bis 8 Kohlenstoffatome aufweist, wie Ethylenglykol, Diethylenglykol, Propylengylkol, Dipropylenglykol, Butylenglykol, Dibutylenglykol oder Neopentylglykol;

- höherwertige Alkohole der allgemeinen Formel

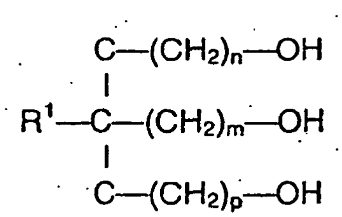

wobei n, m, und p unabhängig 0, 1, 2 oder 3 sind, und $R^1$ ein gesättigter aliphatischer oder cycloaliphatischer $C_1$-$C_6$ Kohlenwasserstoffrest oder ein Rest $OH\text{-}(CH_2)_q$- ist, worin q 0, 1, 2 oder 3 bedeutet (mit der Maßgabe, daß q und m nicht gleichzeitig 0 sind), wie Glycerin, Trimethylolethan, Trimethylolpropan oder Pentaerythrit;

- sonstige höherwertige Alkohole, wie Cyclohexandiol, Threit, Erythrit, Arabit, Adonit, Xylit, Dipentaerythrit, Sorbit, Mannit und Dulcit.

Es können selbstverständlich auch Gemische dieser Alkohole eingesetzt werden.

In einer bevorzugten Ausführungsform der vorliegenden Erfindung werden als Komponente (i) mindestens zwei verschiedene mehrwertige Alkohole eingesetzt. Das Gemisch wird bevorzugt so ausgewählt, daß die durchschnittliche Funktionalität mindestens 2,0, bevorzugt mehr als 2,0, insbesondere 2,1 bis 4,5 ist.

Zur Herstellung des Polyesterharzes wird bevorzugt eine Zusammensetzung verwendet, in der die Menge

der Komponente (i) etwa 10 - 40 Gew.-%, bezogen auf die Summe aller Komponenten (i) bis (iv) beträgt.

**Polyetherpolyol (ii)**

Zur Erleichterung der Emulgierung werden neben den erwähnten niedermolekularen Polyalkoholen (i) höhermolekulare Polyetherpolyole (ii) eingebaut, wie Polyethylenglykol, Polypropylenglykol oder Polytetrahydrofuran. Die Polyetherpolyole sind im Gegensatz zu den als Komponente (i) verwendeten Alkoholen polymere Substanzen mit einem Polymerisationsgrad von typischerweise mehr als 8, bevorzugt 50 bis 200. Das bevorzugte Molekulargewicht der verwendeten Polyetherpolyole beträgt 400 bis 8000, insbesondere 1000 bis 6000. Gemische von Polyetherpolyolen sind erfindungsgemäß mit umfaßt.
Zur Herstellung des Polyesterharzes wird bevorzugt eine Zusammensetzung verwendet, in der die Menge der Komponente (ii) etwa 3 - 15 Gew.-%, bezogen auf die Summe aller Komponenten (i) bis (iv) beträgt.

**Monocarbonsäure (iii)**

Die Monocarbonsäuren (iii) können gesättigte aliphatische, cycloaliphatische oder aromatische Verbindungen sein. Prinzipiell eignen sich als Komponente (iii) somit alle üblichen Carbonsäuren, solange sie keine ethylenisch-ungesättigten Einheiten aufweisen. Diese können einzeln oder als Gemisch verwendet werden.
Geeignete Monocarbonsäuren sind z.B. solche der allgemeinen Formel

$$R^2\text{-COOR'}$$

wobei $R^2$ ein gegebenenfalls durch geradkettige oder verzweigte Alkylgruppen substituierter aromatischer, oder ein geradkettiger oder verzweigter gesättigter aliphatischer oder cycloaliphatischer Kohlenwasserstoffrest mit vorzugsweise 6 bis 30 Kohlenstoffatomen, insbesondere mit 6 bis 18 Kohlenstoffatomen ist, und R' ein Wasserstoffatom (freie Säure), ein geradkettiger oder verzweigter $C_1$-$C_4$ Alkylrest (Ester) oder -(CO)$R^2$ (Anhydrid) sein kann.
Typische Beispiele hierfür sind Isodecansäure, Isooctansäure, Cyclohexansäure, Benzoesäure, p-tert-Butylbenzoesäure und langkettige Carbonsäuren, wie auch natürlich vorkommende gesättigte Fettsäuren.
Beispiele für natürlich vorkommenden gesättigte Carbon- oder Fettsäuren sind Palmitin- und Stearinsäure. Aber auch technisch vollständig hydrierte Modifikationen natürlicher, ungesättigter Fett- oder Ölsäuren sind gut geeignet.
Außerdem sind auch Carbonsäuren einsetzbar, die neben der Carboxylgruppe zusätzlich eine Hydroxylgruppe enthalten, wie es z.B. bei der Rizinusölfettsäure, der Dimethylolpropionsäure oder hydrolysierten, epoxidierten Fettsäuren der Fall ist.
Zur Herstellung des Polyesterharzes können die Monocarbonsäuren entweder in Form der freien Säure, deren Anhydride oder in Form von Estern einfacher Alkohole (z.B. $C_1$-$C_4$ Monoalkohole) eingesetzt werden.
In der vorliegenden Erfindung werden bevorzugt gesättigte aliphatische oder cycloaliphatische Monocarbonsäuren verwendet.
In einer besonders bevorzugten Ausführungsform besteht die Komponente (iii) aus einem Gemisch aus mindestens zwei verschiedenen Monocarbonsäuren.
Zur Herstellung des Polyesterharzes wird bevorzugt eine Zusammensetzung verwendet, in der die Menge der Komponente (iii) etwa 10 - 40 Gew.-%, bezogen auf die Summe aller Komponenten (i) bis (iv) beträgt.

**Polycarbonsäure (iv)**

Die Polycarbonsäuren (iv) besitzen mindestens zwei Carboxylgruppen pro Molekül und können einzeln oder als Gemisch eingesetzt werden.
Geeignete Polycarbonsäuren weisen 4 bis 15, bevorzugt 4 bis 10 Kohlenstoffatome pro Molekül auf und schließen aliphatische, cycloaliphatische und aromatische Polycarbonsäuren ein.
Überraschenderweise können die Polycarbonsäuren (iv) im Gegensatz zu den Monocarbonsäuren (iii) auch ethylenisch ungesättigten Charakter besitzen, ohne daß sich dies ungünstig auf die UV-Stabilität auswirkt.
Geeignete Säuren (iv) sind beispielsweise Dicarbonsäuren der allgemeinen Formel

$$\text{HOOC-}R^3\text{-COOH}$$

wobei $R^3$ ein divalenter Rest, ausgewählt aus einem gesättigten, verzweigten oder unverzweigten, aliphatischen oder

cycloaliphatischen Rest mit 2 bis 13 Kohlenstoffatomen, (vorzugsweise mit 2 bis 6 Kohlenstoffatomen), einem gegebenenfalls durch Alkylgruppen substituierten, aromatischen Kohlenwasserstoffrest mit insgesamt 6 bis 13 Kohlenstoffatomen (vorzugsweise mit 6 bis 10 Kohlenstoffatomen), oder einem ungesättigten, geradkettigen oder verzweigten, aliphatischen Rest mit 2 bis 13 Kohlenstoffatomen (vorzugsweise mit 2 bis 6 Kohlenstoffatomen) ist.

Beispiele hierfür sind Maleinsäure, Fumarsäure, Bernsteinsäure, Terephthalsäure, Isophthalsäure, Adipinsäure, Glutarsäure, Azelainsäure und o-Phthalsäure.

Aber auch höher funktionelle Polycarbonsäuren, d.h. Polycarbonsäuren mit mehr als zwei (vorzugsweise jedoch nicht mehr als sechs) Carboxylgruppen pro Molekül können verwendet werden.

Beispiele höherfunktioneller Polycarbonsäuren sind Tricarbonsäuren, wie Trimellitsäure, Tricarballylsäure, Trimesinsäure oder Hemimellithsäure, Tetracarbonsäuren, wie Pyromellitsäure, oder Polycarbonsäuren mit mehr als drei Carboxylgruppen, wie Mellitsäure.

Als Komponente (iv) können auch Polycarbonsäuren, die mindestens zwei Carboxylgruppen und zusätzlich ein oder mehrere OH-Gruppen aufweisen, verwendet werden, wie Äpfelsäure, Weinsäure, Mesoweinsäure, Traubensäure oder Citronensäure.

Zur Herstellung des Polyesterharzes können die Polycarbonsäuren (iv) entweder in Form der freien Säure oder als Anhydrid oder Ester einfacher $C_1$-$C_4$-Alkohole eingesetzt werden.

Es ist besonders bevorzugt, als Komponente (iv) Dicarbonsäuren bzw. deren Anhydride oder $C_1$-$C_4$-Ester zu verwenden.

In einer anderen bevorzugten Ausführungsform werden als Komponente (iv) mindestens zwei verschiedene Polycarbonsäuren (bevorzugt Dicarbonsäuren) im Gemisch verwendet. Die durchschnittliche Funktionalität beträgt dabei bevorzugt mindestens 2,0, besonders bevorzugt 2,0 bis 3,0.

Zur Herstellung des Polyesterharzes wird bevorzugt eine Zusammensetzung verwendet, in der die Menge der Komponente (iv) etwa 10 - 40 Gew.-%, bezogen auf die Summe aller Komponenten (i) bis (iv) beträgt.

## Herstellung des Harzes

Die Veresterung der Alkohol- und Säurekomponenten erfolgt in der Regel im Temperaturbereich von 180 - 260°C unter Abspaltung von Wasser, das durch Destillation aus dem Reaktionsgemisch entfernt wird. Wie in der Harzchemie üblich, kann dieses Wasser auch durch azeotrope Destillation oder durch Vakuum unterstützt entfernt werden.

Die stöchiometrischen Verhältnisse werden in dem Fachmann bekannter Weise so eingestellt, daß Polyesterharze mit Säurezahlen von 5 - 20 und Hydroxylgehalte von 1 - 8 Gew.-% erhalten werden.

Der Hydroxylgehalt wird wie auf dem Fachgebiet üblich mit Essigsäureanhydrid bestimmt. Die Messung der Säurezahl wird nach DIN 53402 vorgenommen.

Zur Erhöhung des Ausgangs-Molekulargewichts und zur Verbesserung der physikalischen Trocknung bzw. zur schnelleren Austrocknung kann das Polyesterharz mit Isocyanaten vorvernetzt werden. Bei der Vorvernetzung des hydroxyfunktionellen Polyesterharzes sollen jedoch nicht mehr als 30% der verfügbaren Hydroxylgruppen umgesetzt werden. Zur Modifizierung können die für die Kompone'nte (B) nachstehend beschriebenen Isocyanate verwendet werden. Die Umsetzung mit Isocyanat erfolgt üblicherweise im Temperaturbereich von 10 bis 70°C, vorzugsweise 20 bis 50°C.

Die nach dem Vorstehend beschriebenen Verfahren hergestellten Polyester sind überraschenderweise nach der Neutralisation mit Ammoniak oder Aminen zumeist ohne Zusatz von Lösungsmitteln und insbesondere ohne Zusatz von Emulgatoren in Wasser emulgierbar. Die resultierenden Emulsionen haben üblicherweise einen Feststoffgehalt von 20 - 70 %, vorzugsweise von 30 - 55 % und einen pH-Wert von 6 - 9 und zeichnen sich durch ausgezeichnete Lagerstabilität aus.

Die Neutralisation kann durch Zugabe einer kleinen Menge eines Neutralisationsmittels erreicht werden, wobei ein Teil der vorhandenen oder alle Säuregruppen im Harz neutralisiert werden. Geeignete Neutralisationsmittel, die im erfindungsgemäßen Verfahren verwendet werden können, schließen Ammoniak, Ammoniumhydroxid und primäre, sekundäre und tertiäre Mono- oder Polyamine, einschließlich Hydroxylamine und insbesondere niedere Alkylamine ein, wie Ethylamin, Butylamin, Dimethylamin, Diethylamin, Dimethylethylamin, Dimethylisopropylamin, Diethanolamin, Triethanolamin oder Butanolamin. Amine, die bei Temperaturen unter 180°C, vorzugsweise unter 120°C, flüchtig sind, sind bevorzugt. Besonders bevorzugte Amine sind Ammoniak, Triethylamin, Dimethylamin, Dimethylisopropylamin, Dimethylethanolamin, Ethanolamin, Diethanolamin, Triethanolamin, Aminopropanol oder Dimethylaminopropanol. Die Amine können in unverdünnter Form zugegeben werden, wobei im wesentlichen wasserfreie; neutralisierte Harze erhalten werden, die praktisch unbegrenzt in Wasser verdünnt oder dispergiert werden können. Alternativ können die Harze durch Zugabe einer wäßrigen Lösung oder Dispersion von Aminen neutralisiert werden. Ebenso können zur Neutralisation anorganische Neutralisationsmittel, wie Kalium- oder Natriumhydroxid oder Carbonate verwendet werden.

Das Harz wird dann auf eine gewünschte Viskosität in Wasser eingestellt, wobei eine wäßrige Dispersion mit

5 bis 55 Gew.-%, vorzugsweise 25 bis 55 Gew.-% Harzfeststoff (nicht flüchtig) erhalten wird.

Die beschriebenen Polyesterharzemulsionen lassen sich mit den in der Lackindustrie üblichen Zuschlagsstoffen, wie Pigmenten, Füllstoffen und Hilfsstoffen, zu pigmentierten und unpigmentierten Stammlacken formulieren. Zur Verbesserung des Verlaufs, der Benetzung und der Oberflächenqualität ist die Zugabe von Cosolventien zusätzlich möglich.

## Isocyanatkomponente (B)

Die Isocyanatkomponente des Zwei-Komponenten-Wasserlacksystems der vorliegenden Erfindung umfaßt ein gesättigt aliphatisches, cycloaliphatisches oder aromatisches Polyisocyanat, welches vorzugsweise eine mittlere Funktionalität von mindestens zwei, insbesondere von 2,0 bis 4,5 aufweist.

Geeignete Isocyanate umfassen die auf dem Fachgebiet üblichen Diisocyanate und/oder höher funktionellen Polyisocyanate. Diese können alleine oder im Gemisch eingesetzt werden.

Beispiele geeigneter Isocyanate sind:

Toluol-2,4-diisocyanat, Toluol-2,6-diisocyanat, 3-Phenyl-2-ethylendiisocyanat, 1,5-Naphthalindiisocyanat, Cumol-2,4-diisocyanat, 4-Methoxy-1,3-diphenyl-diisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanatodiphenylether, 5,6-Dimethyl-1,3-phenyldiisocyanat, 2,4-Dimethyl-1,3-phenyldiisocyanat, 4,4-Diisocyanatodiphenylether, 4,6-Dimethyl-1,3-phenyldiisocyanat, 9,10-Anthracen-diisocyanat, 2,4,6-Toluoltriisocyanat, 2,4,4'-Triisocyanatodiphenylether, 1,4-Tetramethylendiisocyanat, 1,6-Hexamethylendiisocyanat, 1,10-Decamethylen-diisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat), 1,3-Bis(isocyanato-1-methylethyl)-benzol (m-TMXDI), 1,4-Bis(isocyanato-1-methylethyl)benzol (p-TMXDI), oder Trimethylhexamethylen-diisocyanat.

Insbesondere eignen sich jedoch auch oligomere Polyisocyanate, wie sie in konventionellen, lösungsmittelhaltigen Zwei-Komponenten-Lacken eingesetzt werden. Es handelt sich dabei z.B. um Präaddukte, Isocyanurate, Uretdione, Allophate usw. auf der Basis von Hexamethylendiisocyanat, Isophorondiisocyanat und Toluylendiisocyanat.

Daneben sind auch oligomere Polyisocyanate geeignet, die hydrophile Komponenten enthalten und speziell für den Einsatz in Wasserlacksystemen konzipiert wurden. Derartige Isocyanate sind z.B. in EP-A-540 958, EP-A-645 410, EP-A-754 713, und EP-A-697 424 beschrieben.

In einer bevorzugten Ausführungsform der vorliegenden Erfindung kommen ausschließlich gesättigte, aliphatische und cycloaliphatische Isocyanate zum Einsatz, d.h. solche Isocyanate, bei denen die Isocyanatgruppen ausschließlich an gesättigte Kohlenstoffatomen gebunden sind, wobei darüber hinaus zwar aromatische Reste enthalten sein können, die selbst jedoch keine Isocyanatgruppen tragen.

Zur Erleichterung der Einarbeitung der Isocyanatkomponente können organische Lösungsmittel, wie Ester, Ketone oder Etheracetate eingesetzt werden. Die üblicherweise eingesetzte Lösemittelmenge liegt im Bereich von 10 - 40 %, bezogen auf das eingesetzte Isocyanat.

## Verarbeitung des Lackes

Die beschriebene Isocyanatkomponente wird kurz vor der Verarbeitung homogen mit der Polyesterharzemulsion bzw. dem Stammlack gemischt. Zur Erleichterung der Einarbeitung der Isocyanatkomponente können auch dieser organische Lösungsmittel, wie z.B. Ester, Ketone oder alkylierte Ester mehrwertiger Alkohole oder oligomerer Polyglykole, wie Methoxypropylacetat oder Methoxydiglykolacetat zugesetzt werden.

Üblicherweise liegt die verwendete Lösungsmittelmenge im Bereich von 0 bis 40 Gew.-% bezogen auf das Isocyanat.

Das Mischungsverhältnis von Stammlack und Isocyanat-Härter richtet sich nach dem Hydroxylgehalt des Polyesterharzes und dem NCO-Gehalt des Isocyanates. Die stöchiometrischen Verhältnisse werden nach dem sogenannten Isocyanat-Grundwert berechnet. Dieser definiert die Menge an Polyisocyanat, die 100 Gewichtsteilen der hydroxylgruppenhaltigen Komponente äquivalent sind.

Isocyanat Grundwert =

$$\frac{42 \times 100 \times \text{OH\% der Polyolkomponente}}{17 \times \text{NCO\% der Isocyanatkomponente}}$$

Je nach den gewünschten Eigenschaften kann die Menge an Härter stark variiert werden. In Wasserlacksystemen werden üblicherweise in der Praxis deutlich höhere Isocyanatmengen berechnet. Es werden z.B. Isocyanatüberschüsse von 20 - 70 % benutzt.

Die Gemische von Stammlack und Isocyanatkomponente haben bei Raumtemperatur eine Verarbeitungszeit von 10 min bis 6 h. Die Aushärtung der applizierten Lackschicht kann entweder bei Raumtemperatur oder durch forcierte Trocknung bei erhöhter Temperatur, z.B. bei 80 - 120 °C, erfolgen.

Die Härtungsreaktion läßt sich mit den in der Polyurethanchemie üblichen Katalysatoren, wie z.B. Metallsalzen oder Aminen beschleunigen.

Mit den erfindungsgemäßen Zwei-Komponenten-Wasserlacksystemen lassen sich überraschenderweise Lackschichten von über 120 bis 150 µm ohne unerwünschte Blasenbildung erreichen. Diese Lackschichten zeichnen sich durch hohen Glanz und sehr gute mechanische Eigenschaften, wie Härte, Elastizität, Haftung und insbesondere durch hervorragende Vergilbungs- und UV-Beständigkeit aus.

Die Erfindung wird durch die folgenden, nicht einschränkenden Beispiele weiter erläutert.

**Beispiele:**

Beispiel 1 - Herstellung und Verarbeitung eines Weißlacks

a) Herstellung einer Polyesterharzkomponente (A)

1,67 kg Glycerin, 12 kg Pentaerythrit, 4,3 kg Polyethylenglykol, 10 kg Phthalsäureanhydrid, 3,6 kg Isophthalsäure, 9,1 kg p-tert-Butylbenzoesäure und 7,9 kg 2-Ethylhexansäure werden unter Rühren auf 240°C erhitzt und das entstehende Reaktionswasser wird abdestilliert. Der Ansatz wird bis zu einer Säurezahl von 12 mg KOH/g bei 240 °C gehalten.

Das Reaktionsgemisch wird mit Triethylamin neutralisiert und in 52 kg Wasser emulgiert. Es entsteht eine feinteilige Emulsion mit einem Feststoffgehalt von ca. 43% und einem pH-Wert von 7.

b) Herstellung eines Weißlacks

Mit der in Beispiel a) beschriebenen Emulsion des Polyesterharzes wird ein Weißlack nach folgender Rezeptur hergestellt:

| | | |
|---|---|---|
| A | 60,0 Gew.-Teile | Polyesterharzemulsion Beispiel a) |
| B | 27,8 Gew.-Teile | Titandioxid |
| C | 0,7 Gew.-Teile | Dispergieradditiv (ethoxylierter Fettalkohol) |
| D | 8,5 Gew.-Teile | dest. Wasser |

Die Lackherstellung erfolgt in einer Rührwerkskugelmühle wie üblich.

c) Härtung des Lacks

Der nach Beispiel b) hergestellte Stammlack wird vor der Verarbeitung im Verhältnis 4:1 mit einem Isocyanathärter folgender Zusammensetzung gemischt:

| | |
|---|---|
| 70,0 Gew.-Teile | oligomeres Isocyanat auf Basis Hexamethylendiisocyanat |
| 30,0 Gew.-Teile | Methoxypropylacetat |

Das Gemisch hat eine Verarbeitungszeit von ca. 3 h und läßt sich bis zu einer Trockenschichtdicke von über 150 µm verarbeiten, ohne daß es zu unerwünschter Blasenbildung durch $CO_2$-Entwicklung kommt.

Der durchgehärtete Lack zeichnet sich durch hohen Glanz, ausgezeichnete Vergilbungsbeständigkeit sowie gute Härte und Elastizität aus.

Im Schnellbewitterungstest (1000 h QUV nach DIN 53384) war kein Glanzverlust (Methode nach Gardner, 60°) und keine sichtbare Vergilbung festzustellen.

Beispiel 2 - Herstellung eines Zwei-Komponenten-PU-Klarlacks

Zur Herstellung eines Zwei-Komponenten-PU-Klarlacks werden

| | |
|---|---|
| 87,0 Gew.-Teile | Emulsion nach Beispiel 1-a) |
| 2,0 Gew.-Teile | Verlaufsadditiv auf Polysiloxanbasis |
| 2,0 Gew.-Teile | Butyldiglykolacetat |
| 9,0 Gew.-Teile | Wasser |

homogen gemischt. Vor der Verarbeitung wird die Isocyanatkomponente aus Beispiel 1-b) im Verhältnis 3:1 zugemischt.

Auch diese Klarlackmischung läßt sich bis zu einer Trockenschichtdicke von 150 µm blasenfrei verarbeiten und zeichnet sich durch hervorragende UV-Beständigkeit und hohen Glanz aus.

Im Schnellbewitterungstest (1000 h QUV nach DIN 53384) war kein Glanzverlust (Methode nach Gardner, 60°) und keine sichtbare Vergilbung festzustellen.

Beispiel 3

2,5 kg Trimethylolpropan, 4,1 kg Polyethylenglykol, 14,8 kg Isophthalsäure, 9,1 kg p-tert-Butylbenzoesäure und 8,0 kg 2-Ethylhexansäure werden unter Rühren auf 240°C erhitzt und das entstehende Wasser abdestilliert. Der Ansatz wird bei 240°C gehalten, bis eine Säurezahl von 14 mg KOH/g erreicht ist.

Das Reaktionsgemisch wird mit Triethylamin neutralisiert und anschließend in 55 kg Wasser emulgiert und der Feststoffgehalt der Emulsion auf 43% eingestellt.

Mit dieser Emulsion wurden Lackierungen entsprechend den Beispielen 1 und 2 hergestellt.

Im Schnellbewitterungstest (1000h QUV nach DIN 53384) wurde kein Glanzverlust gemessen (Methode nach Gardner, 60°) und keine sichtbare Vergilbung festgestellt.

Vergleichsbeispiel

10 kg Erdnußöl, 3,8 kg Polyethylenglykol, 9,5 kg Pentaerythrit werden 3h bei 230°C gehalten. Anschließend werden 12,6 kg Phthalsäureanhydrid und 3,8 kg Pentaerythrit zugegeben und unter Wasserabspaltung bei 240°C so lange verestert, bis eine Säurezahl von 13 mg KOH/g erreicht ist. Das entstehende Reaktionsprpdukt wird mit Triethylamin neutralisiert und in 55 kg Wasser emulgiert.

Mit dieser Emulsion wurden Lackierungen gemäß den Beispielen 1 und 2 hergestellt.

Im Schnellbewitterungstest (1000 h QUV nach DIN 53384) wurde ein Glanzverlust (Methode nach Gardner, 60°) von ca. 25 % im Weißlack (gemäß Beispiel 1) und 20% beim Klarlack (gemäß Beispiel 2), sowie in beiden Fällen eine gerade sichtbare leichte Vergilbung festgestellt.

**Patentansprüche**

**1.** Zwei-Komponenten-Wasserlacksystem, umfassend:

(A) eine wässrige Emulsion eines hydroxyfunktionellen Polyesterharzes erhältlich durch Umsetzung einer Zusammensetzung, die

(i) mindestens einen niedermolekularen mehrwertigen Alkohol mit mindestens zwei Hydroxylgruppen pro Molekül,
(ii) mindestens ein Polyetherpolyol,
(iii) mindestens eine monofunktionelle gesättigte aliphatische, cycloaliphatische oder aromatische Carbonsäure, und
(iv) mindestens eine Polycarbonsäure mit mindestens zwei Carboxylgruppen pro Molekul

enthält, wobei die Zusammensetzung keine ethylenisch ungesättigten Monocarbonsäuren aufweist und
(B) eine Isocyanatkomponente.

**2.** Zwei-Komponenten-Wasserlacksystem nach Anspruch 1, wobei die Komponente (i) ein Gemisch aus mindestens zwei verschiedenen Polyolen mit jeweils mindestens zwei Hydroxylgruppen pro Molekül ist und die durchschnittliche Funktionalität mindestens 2,0 beträgt.

**3.** Zwei-Komponenten-Wasserlacksystem nach Anspruch 1 oder 2, wobei die Komponente (iii) aus Verbindungen

der allgemeinen Formel

$$R^2\text{-COOR'}$$

ausgewählt ist, wobei $R^2$ ein gegebenenfalls durch geradkettige oder verzweigte Alkylgruppen substituierter aromatischer, oder ein geradkettiger oder verzweigter gesättigter aliphatischer oder cycloaliphatischer Kohlenwasserstoffrest, und R' ein Wasserstoffatom, ein geradkettiger oder verzweigter $C_1$-$C_4$ Alkylrest oder ein Rest -(CO) $R^2$ ist.

**4.** Zwei-Komponenten-Wasserlacksystem nach einem der Ansprüche 1 bis 3, wobei die Komponente (iii) ein Gemisch aus mindestens zwei verschiedenen gesättigten Monocarbonsäuren ist.

**5.** Zwei-Komponenten-Wasserlacksystem nach einem der Ansprüche 1 bis 4, wobei die Komponente (iv) ein Gemisch aus mindestens zwei verschiedenen Polycarbonsäuren mit jeweils mindestens zwei Carboxylgruppen pro Molekül ist, und die durchschnittliche Funktionalität mindestens 2,0 beträgt.

**6.** Zwei-Komponenten-Wasserlacksystem nach einem der Ansprüche 1 bis 5, wobei die Zusammensetzung 3 bis 15% der Komponente (i), 10 bis 40% der Komponente (ii), 10 bis 40% der Komponente (iii) und 10 bis 40% der Komponente (iv) umfasst.

**7.** Zwei-Komponenten-Wasserlacksystem nach einem der Ansprüche 1 bis 6, wobei der Hydroxylgehalt des Harzes einen Wert von 1 bis 8 Gew.-% aufweist.

**8.** Zwei-Komponenten-Wasserlacksystem nach einem der Ansprüche 1 bis 7, wobei das Harz zusätzlich durch Umsetzung mit Isocyanat modifiziert ist.

**9.** Verfahren zur Herstellung eines Zwei-Komponenten-Wasserlacksystems nach einem der Ansprüche 1 bis 8, umfassend die Schritte:

Bereitstellen einer Polyesterharzkomponente (A) durch

(a) Umsetzung einer Zusammensetzung enthaltend mindestens einen niedermolekularen mehrwertigen Alkohol mit mindestens zwei Hydroxylgruppen pro Molekül, mindestens ein Polyetherpolyol, mindestens eine monofunktionelle gesättigte aliphatische, cycloaliphatische oder aromatische Monocarbonsäure und mindestens eine Polycarbonsäure mit mindestens zwei Carboxylgruppen pro Molekül zu einem hydroxyfunktionellen Polyesterharz,
wobei die Zusammensetzung keine ethylenisch ungesättigten Monocarbonsäuren aufweist
(b) Neutralisation des hydroxyfunktionellen Polyesterharzes mit Ammoniak oder Amin,
(c) Emulgieren des hydroxyfunktionellen Polyesterharzes in Wasser, und
(d) gegebenenfalls Zusatz von einem oder mehreren Zusatzstoffen, ausgewählt aus Pigmenten, Füllstoffen, Hilfsstoffen und Cosolyentien, sowie

Bereitstellen einer Isocyanatkomponente (B).

**10.** Verwendung eines hydroxyfunktionellen Polyesterharzes, erhältlich, durch Umsetzung einer Zusammensetzung, die

(i) mindestens einen niedermolekularen mehrwertigen Alkohol mit mindestens zwei Hydroxylgruppen pro Molekül,
(ii) mindestens ein Polyetherpolyol,
(iii) mindestens eine monofunktionelle gesättigte aliphatische, cycloaliphatische oder aromatische Carbonsäure, und
(iv) mindestens eine Polycarbonsäure mit mindestens zwei Carboxylgruppen pro Molekül enthält, wobei die Zusammensetzung keine ethylenisch ungesättigten Monocarbonsäuren aufweist zur Herstellung eines Zwei-Komponenten-Wasserlacksystems, wobei

das Zwei-Komponenten-Wasserlacksystem eine wässrige Emulsion des hydroxyfunktionellen Polyesterharzes

und eine Isocyanatkomponente enthält.

## Claims

1. A two-component water-based paint system, comprising:

   (A) an aqueous emulsion of a hydroxy-functional polyester resin, obtainable by the reaction of a composition, which contains

      (i) at least one low-molecular polyvalent alcohol having at least two hydroxyl groups per molecule,
      (ii) at least one polyether polyol,
      (iii) at least one monofunctional saturated aliphatic, cycloaliphatic or aromatic carboxylic acid, and
      (iv) at least one polycarboxylic acid having at least two carboxyl groups per molecule,

   wherein the composition does not contain any ethylenically unsaturated monocarboxylic acids, and
   (B) an isocyanate component.

2. The two-component water-based paint system according to claim 1, wherein said component (i) is a mixture of at least two different polyols each having at least two hydroxyl groups per molecule and the average functionality is at least 2.0.

3. The two-component water-based paint system according to claim 1 or 2, wherein said component (iii) is selected from compounds of the general formula

$$R^2\text{-COOR'}$$

   wherein $R^2$ is an aromatic, hydrocarbon group which is optionally substituted by straight-chain or branched alkyl groups or is a straight-chain or branched saturated aliphatic or cycloaliphatic hydrocarbon group, and R' is a hydrogen atom, a straight-chain or branched $C_1$-$C_4$ alkyl group or a -(CO)$R^2$ group.

4. The two-component water-based paint system according to any one of claims 1 to 3, wherein said component (iii) is a mixture of at least two different saturated monocarboxylic acids.

5. The two-component water-based paint system according to any one of claims 1 to 4, wherein said component (iv) is a mixture of at least two different polycarboxylic acids having each at least two carboxyl groups per molecule, and the average functionality is at least 2.0.

6. The two-component water-based paint system according to any one of claims 1 to 5, wherein the composition comprises 3 to 15% of component (i), 10 to 40% of component (ii), 10 to 40% of component (iii) and 10 to 40% of component (iv).

7. The two-component water-based paint system according to any one of claims 1 to 6, wherein the hydroxyl content of the resin is from 1 to 8 weight-%.

8. The two-component water-based paint system according to any one of claims 1 to 7, wherein the resin is additionally modified by reaction with isocyanate.

9. A method for the preparation of a two-component water-based paint system according to any of claims 1 to 8, comprising the steps of providing a polyester resin component (A) by

   (a) reacting a composition containing at least one low-molecular polyvalent alcohol having at least two hydroxyl groups per molecule, at least one polyether polyol, at least one monofunctional saturated aliphatic, cycloaliphatic or aromatic monocarboxylic acid, and at least one polycarboxylic acid having at least two carboxyl groups per molecule to obtain a hydroxy-functional polyester resin, wherein the composition does not contain any ethylenically unsaturated monocarboxylic acids,
   (b) neutralizing said hydroxy-functional polyester resin with ammonia or amine,

(c) emulsifying said hydroxy-functional polyester resin in water, and
(d) optionally adding one or more additives, selected from the group consisting of pigments, fillers, auxiliaries and cosolvents, as well as

providing an isocyanate component (B).

**10.** Use of a hydroxy-functional polyester resin, obtainable by the reaction of a composition, which contains

(i) at least one low-molecular polyvalent alcohol having at least two hydroxyl groups per molecule,
(ii) at least one polyether polyol,
(iii) at least one monofunctional saturated aliphatic, cycloaliphatic or aromatic carboxylic acid, and
(iv) at least one polycarboxylic acid having at least two carboxyl groups per molecule, wherein the composition does not contain any ethylenically unsaturated monocarboxylic acids,

for the preparation of a two-component water-based paint system, wherein the two-component water-based paint system contains an aqueous emulsion of said hydroxy-functional polyester resin and an isocyanate component.

## Revendications

**1.** Système de laque aqueuse bicomposant qui comprend :

(A) une émulsion aqueuse d'une résine polyester à fonctions hydroxyles, qui peut être obtenue par conversion d'une composition contenant

(i) au moins un alcool polyvalent de faible poids moléculaire, comportant au moins deux groupes hydroxyles par molécule,
(ii) au moins un polyéther polyol,
(iii) au moins un acide carboxylique monofonctionnel saturé, aliphatique, cycloaliphatique ou aromatique, et
(iv) au moins un acide polycarboxylique comportant au moins deux groupes carboxyles par molécule,

la composition ne présentant aucun acide monocarboxylique éthyléniquement insaturé,
(B) un composant isocyanate.

**2.** Système de laque aqueuse bicomposant selon la revendication 1, où le composant (i) est un mélange d'au moins deux polyols différents ayant respectivement au moins deux groupes hydroxyles par molécule et où la fonctionnalité moyenne est au moins de 2,0.

**3.** Système de laque aqueuse bicomposant selon la revendication 1 ou 2, où le composant (iii) est choisi parmi les composés de formule générale

$$R^2\text{-COOR'}$$

où $R^2$ est un groupe hydrocarbure aromatique, le cas échéant substitué par des groupes alkyles linéaires ou ramifiés, ou aliphatique ou cycloaliphatique saturé, linéaire ou ramifié, et R' peut être un atome d'hydrogène, un groupe alkyle en $C_1$-$C_4$ linéaire ou ramifié ou un groupe -(CO)$R^2$.

**4.** Système de laque aqueuse bicomposant selon l'une des revendications 1 à 3, où le composant (iii) est un mélange d'au moins deux acides monocarboxyliques différents.

**5.** Système de laque aqueuse bicomposant selon l'une des revendications 1 à 4, où le composant (iv) est un mélange d'au moins deux acides polycarboxyliques différents ayant respectivement au moins deux groupes carboxyles par molécule et où la fonctionnalité moyenne est au moins de 2,0.

**6.** Système de laque aqueuse bicomposant selon l'une quelconque des revendications 1 à 5, où la composition présente de 3 à 15 % du composant (i), 10 à 40 % du composant (ii), 10 à 40 % du composant (iii) et 10 à 40 %

du composant (iv).

**7.** Système de laque aqueuse bicomposant selon l'une quelconque des revendications 1 á 6, où la teneur en hydroxyle de la résine présente une valeur de 1 à 8 % en poids.

**8.** Système de laque aqueuse bicomposant selon l'une quelconque des revendications 1 á 7, où la résine est en plus modifiée par conversion avec de l'isocyanate.

**9.** Procédé de fabrication d'un système de laque aqueuse bicomposant selon l'une quelconque des revendications 1 à 8, qui comprend les étapes de

préparation d'un composant de résine polyester (A) par

(a) conversion d'une composition comprenant au moins au moins un alcool polyvalent de faible poids moléculaire, comportant au moins deux groupes hydroxyles par molécule, au moins un polyéther polyol, au moins un acide carboxylique monofonctionnel saturé, aliphatique, cycloaliphatique ou aromatique, et au moins un acide polycarboxylique comportant au moins deux groupes carboxyles par molécule, pour donner une résine polyester à fonctions hydroxyles, la composition ne présentant aucun acide monocarboxylique éthyléniquement insaturé,
(b) neutralisation de la résine polyester à fonctions hydroxyles avec de l'ammoniaque ou une amine,
(c) émulsionnement de la résine polyester à fonctions hydroxyles dans de l'eau, et
(d) le cas échéant, addition d'un ou de plusieurs additifs, choisis parmi les pigments, charges, auxiliaires et cosolvants, et

préparation d'un composant isocyanate (B).

**10.** Utilisation d'une résine polyester à fonctions hydroxyles, pouvant être obtenue par conversion d'une composition comprenant :

(i) au moins un alcool polyvalent de faible poids moléculaire, comportant au moins deux groupes hydroxyles par molécule,
(ii) au moins un polyéther polyol,
(iii) au moins un acide carboxylique monofonctionnel saturé, aliphatique, cycloaliphatique ou aromatique, et
(iv) au moins un acide polycarboxylique comportant au moins deux groupes carboxyles par molécule,

la composition ne présentant aucun acide monocarboxylique éthyléniquement insaturé, pour la fabrication d'un système de laque aqueuse bicomposant, où le système de laque aqueuse bicomposant contient une émulsion aqueuse de résine polyester à fonctions hydroxyles et un composant isocyanate.